# FASCICULE DE BREVET EUROPEEN

(11) **EP 0 633 169 B1**
(45) Date de publication et mention de la délivrance du brevet: **04.12.1996**
(21) Numéro de dépôt: 94401068.5
(22) Date de dépôt: 11.05.1994
(51) Int. Cl.: B60R 22/26

(54) **Support articulé pour enrouleur de ceinture de sécurité et son application à un dossier rabattable de siège**
Ausschwenkbarer Träger für einen Sicherheitsgurtaufroller und seine Verwendung mit einer klappbaren Rückenlehne
Hinged support for a safety belt retractor and its use with a foldable seat back

(30) Priorité: 08.07.1993 FR 9308432
(43) Date de publication de la demande: 11.01.1995
(73) Titulaire: CESA COMPAGNIE EUROPEENNE DE SIEGES POUR AUTOMOBILES, F-92307 Levallois-Perret Cédex (FR)
(72) Inventeur: Large, Nathalie, F-45230 Chatillon Coligny (FR); Fourrey, François, F-25200 Montbeliard (FR)
(74) Mandataire: Polus, Camille

(56) Documents cités:
- EP-A- 0 267 450
- DE-A- 2 923 550
- GB-A- 2 018 575
- PATENT ABSTRACTS OF JAPAN vol. 11, no. 16 (M-554) (2463) 16 Janvier 1987 & JP-A-61 191 453 (NISSAN MOTOR CO LTD) 26 Août 1986

## Description

La présente invention est relative aux véhicules automobiles et, plus particulièrement, à un support articulé pour enrouleur de sangle de ceinture de sécurité destiné à être monté sur un dossier mobile d'un siège.

Les véhicules automobiles terrestres contemporains sont équipés de ceintures de sécurité afin de protéger leurs occupants en cas de chocs ou d'accidents provoquant des efforts à grande composante longitudinale.

Les ceintures de sécurité sont habituellement munies de trois points d'ancrage afin de former un brin thoracique et un brin abdominal sur la sangle de la ceinture de sécurité. Pour des raisons de confort et de commodité, les ceintures de sécurité sont habituellement pourvues d'un enrouleur de sangle qui maintient cette dernière tendue. De la sorte, lorsqu'une ceinture de sécurité est portée par un occupant, elle permet à ce dernier de se mouvoir avec une certaine aisance, sans entraves notables, tout en demeurant appliquée contre son corps. Lorsque la ceinture n'est pas utilisée, la sangle est rappelée par l'enrouleur de manière à ne pas gésir en désordre dans l'habitacle, sur le sol ou sur le siège. L'enrouleur est habituellement équipé d'un détecteur de position et/ou d'accélération qui interdit le déroulement de la sangle de ceinture lorsque le véhicule prend une position inclinée ou subit des changements d'accélération dépassant des seuils prédéterminés, ou bien lorsque la sangle de la ceinture est déroulée brusquement avec une accélération tangentielle elle aussi supérieure à un seuil préfixé. De la sorte , un occupant portant normalement sa ceinture de sécurité est retenu efficacement sur son siège, comme il est bien connu.

Les points d'ancrage de la sangle d'une ceinture de sécurité sont habituellement disposés dans l'habitacle soit directement sur la coque ou structure du véhicule, soit associés au siège de manière à constituer une ceinture du type dit "embarqué", et, ainsi reliés indirectement à la coque ou structure du véhicule.

Certains types de véhicule sont tels que l'enrouleur de la sangle d'une ceinture de sécurité est incorporé au dossier du siège et, en particulier, du siège d'une ou des places arrière comme connu du EP-A-267 450 comportant les caractéristiques du préambule de la revendication 1. Dans une telle situation, une difficulté supplémentaire apparaît lorsque le dossier du siège et, en particulier, d'une place arrière est rabattable en vis-à-vis de l'assise afin d'augmenter momentanément le volume disponible situé derrière le siège et notamment du compartiment à bagages. On comprend la difficulté de la situation puisque lorsqu'un tel dossier occupe sa position normalement dressée qui permet à un occupant de prendre place sur le siège, il faut, pour des raisons de sécurité, à la fois que le dossier soit immobilisé dans cette position dressée et que l'enrouleur de la sangle de la ceinture de sécurité qui lui est associé soit relié de manière indéfectible à la coque ou structure du véhicule afin de lui transmettre les efforts que la ceinture subit en cas de chocs.

Le but de l'invention est de remédier à ce type de difficultés grâce à une solution dont le fonctionnement est tel que la ceinture de sécurité ne peut pas être normalement utilisée par un occupant du siège si le dossier n'est pas correctement verrouillé et condamné dans sa position dressée avec son enrouleur de sangle de la ceinture de sécurité.

L'invention a pour objet un support articulé pour enrouleur de sangle de ceinture de sécurité destiné à être monté sur un dossier mobile normalement dressé et rabattable en vis-à-vis d'une assise d'un siège destiné à être placé dans un habitacle de véhicule automobile terrestre. Ce support est remarquable en ce qu'il comprend une embase qui est apte à recevoir l'enrouleur et qui est montée mobile relativement au dossier entre une position normale active et une position basculée inactive, une articulation reliant le dossier et l'embase pour permettre à cette dernière de basculer, un verrou qui est porté pour partie par l'embase et pour partie par l'habitacle et qui est mobile entre une position condamnée où à la fois le dossier est retenu normalement dressé et l'enrouleur est apte à normalement fonctionner et une autre position, une sollicitation élastique pour tendre à normalement placer le verrou dans sa position condamnée et un dispositif de commande pour placer le verrou dans cette autre position et l'embase dans sa position basculée à l'encontre de cette sollicitation élastique de manière à pouvoir rabattre le dossier normalement dressé en vis-à-vis de l'assise

D'autres caractéristiques de l'invention apparaîtront à la lecture de la description et des revendications qui suivent ainsi qu'à l'examen du dessin annexé, donné seulement à titre d'exemple, où :

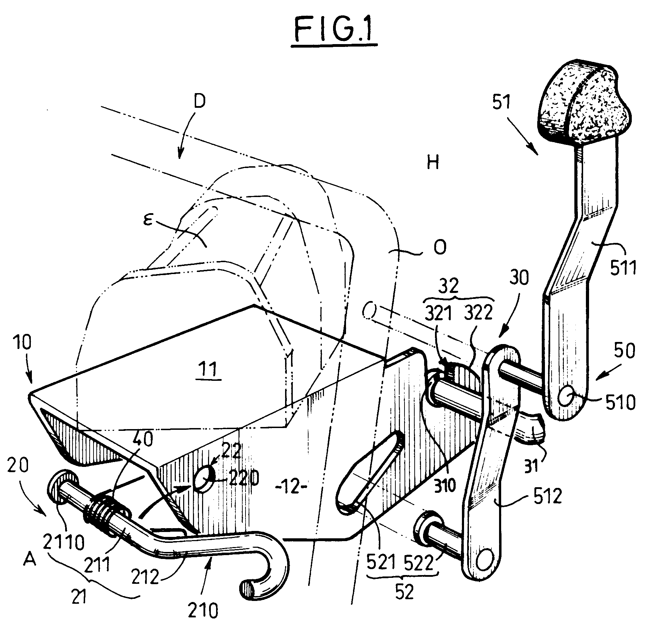

- la Figure 1 est une vue perspective schématique éclatée partielle d'un mode de réalisation d'un support articulé selon l'invention;
- la Figure 2 est une vue de côté partielle en élévation du support de la Figure 1 illustré dans l'une de ses positions;
- la Figure 3 est une vue analogue à celle de la Figure 2 mais seulement schématique; et
- la Figure 4 est une vue analogue à celle de la Figure 3 dans une autre de ses positions.

Les véhicules automobiles terrestres ainsi que leurs équipements tels les sièges et les ceintures de sécurité notammment, étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un support selon l'invention avant d'en exposer la fabrication au besoin, et le montage et le fonctionnement.

Dans ce qui suit, toutes les indications relatives à une orientation telles que haut, bas, vertical, horizontal, longitudinal, transversal, latéral, etc sont faites par rapport aux axes de référence traditionnels d'un véhicule supposé dans sa position normale de circulation.

Un support selon l'invention est destiné à équiper un dossier D d'un siège avec une assise; ce siège est destiné à être placé par exemple sur le plancher d'un habitacle H délimité par une coque ou structure C d'un véhicule. Le dossier D comprend une armature ou ossature O sur laquelle est placé un coussin, comme il est connu. Des moyens de basculement de tout type classique connu, telle une charnière ou analogue rendent le dossier mobile entre une position normalement dressée qui permet à un occupant du siège d'y appuyer son dos, et une position rabattue où le dossier est en vis-à-vis de l'assise, au besoin à son contact. Tout ceci est classique et il n'est pas nécessaire de s'y étendre plus amplement.

Un tel siège est habituellement équipé d'une ceinture de sécurité munie d'un enrouleur ε dont le boîtier β contient un détecteur de position et/ou d'accélération et des moyens de rappel d'une sangle σ de ceinture. Ceci est classique et on ne s'y étendra pas plus amplement. Le détecteur comprend, habituellement, notamment une bille libre de se déplacer dans une coupelle ou cupule conique ou hémisphérique portée par un levier articulé. On pourra par exemple, se reporter utilement au document FR 2 616 391 pour plus ample information notamment sur son fonctionnement.

Un support articulé pour enrouleur de sangle de ceinture de sécurité selon l'invention comprend, essentiellement, une embase 10 mobile, une articulation 20, un verrou 30, une sollicitation élastique 40 et un dispositif de commande 50.

Comme on le voit, l'embase 10 par exemple en forme d'étrier, comprend un socle 11 apte à recevoir le boîtier β d'un enrouleur ε, et au moins une aile 12, et de préférence deux inégales, de manière à former approximativement un U inversé à jambes dissymétriques. L'une de ses ailes, et de préférence les deux, sont associées à l'articulation 20. Comme on le comprendra par la suite, l'une des ailes et de préférence la plus grande, porte une partie du verrou 30.

L'articulation 20 de tout type approprié connu, comprend par exemple un axe 21, et un palier 22 pour relier le dossier et l'embase. Comme illustré clairement sur les figures du dessin, l'axe 21 se présente par exemple sous la forme d'une tige 210 ou similaire pliée en équerre avec une branche 211 terminée par une tête 2110, et avec une branche 212 en U. Le palier 22 se présente, par exemple, sous la forme de trous 220 pratiqués dans les ailes 12. La branche 212 est fixée de toute manière appropriée par exemple par vissage, rivetage, soudage à l'armature du dossier et la branche 211 est engagée dans les trous des ailes de l'embase. On comprend que de la sorte l'embase est montée mobile relativement au dossier et cela entre une position normale active et une position basculée inactive, sur lesquelles on reviendra.

Le verrou 30 comprend une gâche 31 fixe et un pêne 32 mobile. La gâche 31 se présente à la manière d'une barre ou similaire, fixée à la coque ou structure C de l'habitacle de toute manière appropriée convenable par exemple vissage, rivetage ou soudage. Comme dessiné, l'extrémité libre de la barre de la gâche 31 se termine par une tête 310 dont le rôle apparaîtra par la suite. Le pêne 32 se présente par exemple à la manière d'un crochet 321 avec une rampe 322 inclinée. Ce crochet est ménagé de préférence sur la grande aile 12 de l'embase 10, comme illustré. Comme on le voit, la gâche et le pêne forment un mécanisme à échappement. Comme on l'observe, le verrou est mobile entre une position condamnée pour laquelle le crochet du pêne agrippe de manière indéflectible la barre de la gâche et une autre position pour laquelle le crochet du pêne est dégagé de la barre de la gâche.

La sollicitation élastique 40 telle que par exemple un ressort à boudin à spires hélicoïdales jointives terminé par deux bras radiaux, tend normalement à placer le verrou 30 dans sa position condamnée. Pour ce faire, comme illustré, le ressort est enfilé sur la tige 211 de manière que ses bras soient en appui.

Le dispositif de commande 50 permet de placer, à volonté, l'embase 10 dans sa position basculée et le verrou 30 dans son autre position à l'encontre de la sollicitation élastique, pour les raisons qui apparaîtront par la suite. Comme on le voit, le dispositif de commande comprend notamment un levier de manoeuvre 51 et une liaison 52. Le levier 51 comprend par exemple une bielle 511 et une biellette 512 calées toutes deux en rotation sur un pivot 510 monté libre en rotation sur le dossier et notamment sur son armature, comme cela est clairement illustré sur les figures du dessin. Le levier 51 peut aussi être fait d'un seul tenant. La liaison 52 comprend une came 521 qui est portée par l'embase 10 et plus particulièrement par sa grande aile 12, et une contre-came 522 qui coopère avec la came 521 et qui est portée par la biellette 512. Comme on le voit, la came 521 se présente à la manière d'une boutonnière triangulaire à sommets de préférence arrondis, découpée dans la grande aile 12 de l'embase 10, et la contre-came 522 se présente par exemple à la manière d'un doigt de préférence cylindrique ou similaire.

Tous les constituants d'un support articulé selon l'invention sont faits à partir de matériaux traditionnels tels que par exemple des flans, tubes, cornières métalliques, ou de pièces en résine synthétique appropriée, qui sont confectionnés selon le cas par découpe, pliage, cintrage, estampage, emboutissage ou moulage par exemple par injection.

Tous les constituants d'un support selon l'invention sont réunis, montés et assemblés comme cela ressort clairement de l'examen des figures du dessin. On notera en particulier que l'un des bras du ressort de la sollicitation élastique prend appui contre l'embase en particulier contre le socle, et l'autre des bras de ce ressort prend appui contre le dispositif de commande, en particulier contre le doigt de la contre-came.

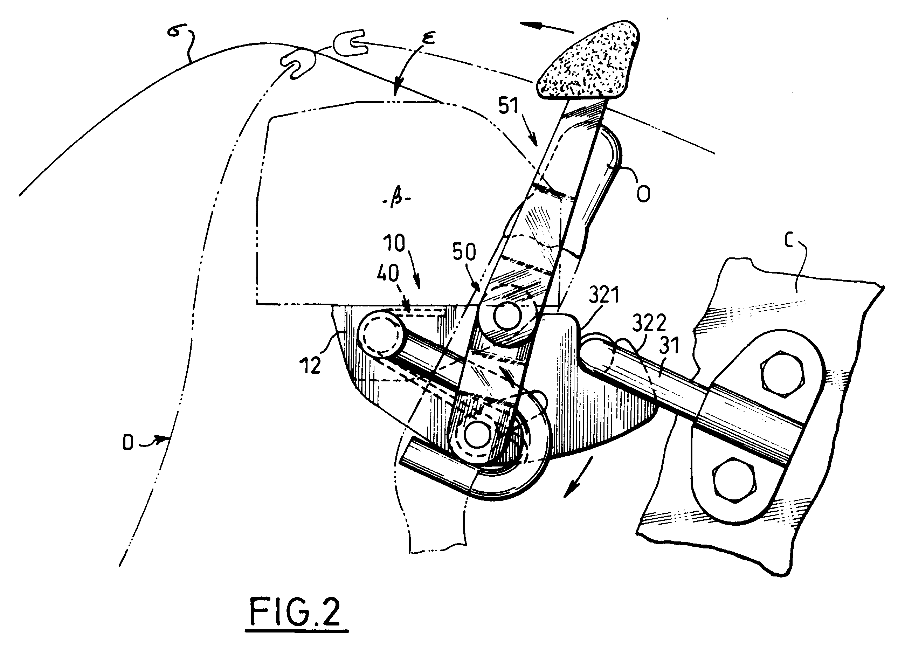

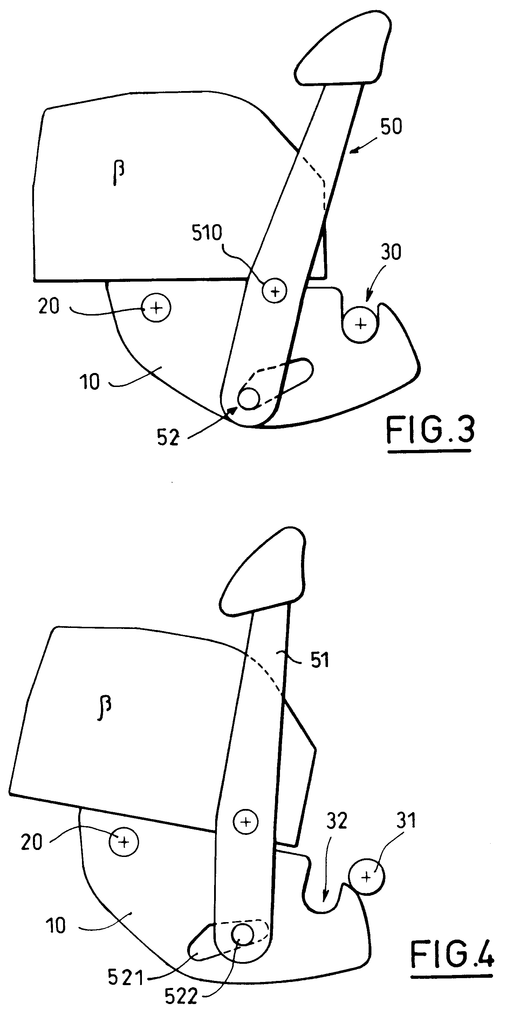

On suppose qu'à l'état initial, le support et le dossier sont dans la position où ils sont illustrés sur les Figures 2 et 3. Dans une telle situation, le dossier est normalement dressé, l'embase occupe sa position normale active et le verrou occupe sa position condamnée. On voit donc que dans une telle configuration, le pêne est engagé dans la gâche et, de la sorte, à la fois le dossier est immobilisé en position dressée et l'enrouleur est dans une situation où il est apte à fonctionner normalement et où tous les efforts qu'il aurait à subir et transmettre sont retransmis à la coque ou structure de l'habitable. L'enrouleur est dans une position où il est apte à normalement fonctionner, c'est-à-dire qu'il est placé dans une position correcte où s'il subit une variation d'accélération supérieure au seuil prédéterminé ou bien si sa sangle est soumise à une accélération tangentielle supérieure à un seuil prédéterminé, le détecteur bloque notamment les moyens de rappel pour immobiliser la sangle de la ceinture dans l'état où elle se trouve à cet instant. Ceci est classique.

Si maintenant on souhaite rabattre le dossier du siège en vis-à-vis de l'assise, il suffit d'agir sur le levier de manoeuvre en le faisant basculer dans le sens anti-horaire sur la Figure 2 et la Figure 3 symbolisé par une flèche, à l'encontre du couple exercé par la sollicitation élastique. En faisant ceci, le levier tourne sur son pivot et entraîne, par la liaison, l'embase qui tourne dans le sens opposé horaire symbolisé par une flèche sur l'articulation, à l'encontre du couple exercé par la sollicitation élastique. On voit alors que le pêne se dégage et se sépare de la gâche du verrou et prend par exemple la position illustrée sur la Figure 4. Simultanément à ce déverrouillage, on amorce le rabattement du dossier en le faisant basculer dans le sens anti-horaire en regardant les Figures 2, 3 et 4. On peut alors achever de rabattre le dossier, et tout ce qu'il porte, en vis-à-vis de l'assise du dossier.

Pour replacer le dossier en position redressée, il suffit de relever le dossier en le basculant dans le sens horaire en regardant les mêmes figures. Lorsque le dossier approche de la fin de sa course, comme illustré par exemple sur la Figure 4, la rampe du pêne rencontre la gâche et fait basculer l'embase sur l'articulation, à l'encontre du couple développé par la sollicitation élastique lorsqu'on pousse ou tire sur le dossier. Du fait de la configuration donnée à la liaison, le pêne peut donc "s'effacer" spontanément devant la gâche avant de venir s'y réenclencher automatiquement sous l'action de rappel de la sollicitation élastique, comme illustré sur la Figure 3. Le fonctionnement est analogue à celui d'un mécanisme à échappement.

Toutefois, si le dossier n'était pas totalement redressé et que le pêne demeurait relativement à la gâche dans la position où il est illustré sur la Figure 4, le dossier ne serait pas immobilisé et le verrou ne serait pas condamné. Si dans une telle situation la ceinture de sécurité était soumise à des forces ou couples tendant à rabattre le dossier en vis-à-vis de l'assise, les efforts communiqués à la sangle de la ceinture de sécurité ne pourraient pas être transmis à la coque ou structure par l'intermédiaire de la gâche du verrou puisque le pène n'est pas engagé dans cette dernière. Cette situation est intolérable car elle nuit de manière rédhibitoire à la sécurité de l'occupant du siège. Cette situation, toutefois, est immanquablement signalée à l'occupant puisque lorsque le dossier occupe une position qui donne l'apparence ou l'illusion d'une position redressée correcte, le détecteur de l'enrouleur de sangle bloque toute tentative de déroulement de la sangle du fait de l'orientation défectueuse du boîtier de l'enrouleur, et le passager qui se trouverait assis sur un siège dans cette position du dossier ne pourrait pas se revêtir de sa ceinture de sécurité et serait donc ainsi alerté de l'absence de condamnation du dossier du siège dans sa position dressée normale et de l'absence d'ancrage complet réel de la ceinture de sécurité.

S'il y a lieu, pour améliorer le confort du passager le boîtier de l'enrouleur est monté orientable sur l'embase selon une direction perpendiculaire au socle, au besoin avec un rappel automatique dans une position moyenne de l'amplitude de la course choisie.

Avec la solution selon l'invention, on voit que pratiquement tous les efforts subis par la ceinture de sécurité sont transmis à la coque ou structure sans faire participer le dossier, et en particulier son armature, à la transmission de ces efforts. On voit aussi que lorsqu'on tire sur la ceinture pour la dérouler et, par exemple, s'en revêtir le sens des efforts est tel qu'il favorise l'enclenchement du pène dans la gâche et qu'il en est de même lorsqu'un occupant appuie son dos contre le dossier. De plus, on voit aussi qu'en cas d'accident à composante transversale, la tête 310 placée à l'extrémité libre de la barre de la gâche 31 empêche le pène 32 de se dégager latéralement.

Ce qui précède met bien en lumière les particularités de l'invention, l'intérêt qu'elle offre et les avantages qu'elle procure.

## Revendications

1. Support pour enrouleur de sangle de ceinture de sécurité (ε) destiné à être monté sur un dossier (D) mobile normalement dressé et rabattable en vis-à-vis d'une assise d'un siège destiné à être placé dans un habitacle (H) de véhicule automobile terrestre, caractérisé en ce que ledit support est articulé et comprend une embase (10) qui est apte à recevoir cet enrouleur (ε) et qui est montée mobile relativement au dossier (D) entre une position normale active et une position basculée inactive, une articulation (20) reliant ce dossier (D) et cette embase (10) pour permettre à cette dernière (10) de basculer, un verrou (30) qui est porté pour partie par cette embase (10) et pour partie par cet habitacle (H) et qui est mobile entre une position condamnée où à la fois le dossier (D) est retenu normalement dressé et l'enrouleur (ε) est apte à normalement fonctionner et une autre position, une sollicitation élastique (40) pour tendre à normalement placer le verrou (30) dans sa position condamnée, et un dispositif de commande (50) pour placer le verrou (30) dans cette autre position et l'embase (10) dans sa position basculée à l'encontre de cette sollicitation élastique (40) de manière à pouvoir rabattre le dossier (D) normalement dressé en vis-à-vis de l'assise.

2. Support selon la revendication 1, caractérisé en ce que l'embase (10) comprend un socle (11) apte à recevoir un enrouleur (ε) et au moins une aile (12) qui est associée à l'articulation (20), qui porte une partie du verrou (30) et qui est reliée à la commande (50).

3. Support selon la revendication 1 ou 2 pour un siège dont le dossier (D) présente une armature (O), caractérisé en ce que l'articulation (20) comprend un axe (21) fixé à l'armature (O) du dossier (D) et au moins un palier (22) porté par une aile (12) de l'embase (10).

4. Support selon l'une quelconque des revendications 1 à 3, caractérisé en ce que le verrou (30) comprend une gâche (31) fixe fixée à l'habitacle (H) et un pêne (32) porté par l'embase (10) et mobile entre la position condamnée et cette autre position.

5. Support selon la revendication 4, caractérisé en ce que le pêne (32) est solidaire d'une aile (12) de l'embase (10) et se présente à la manière d'un crochet (321) avec une rampe (322) aptes à coopérer tous deux avec la gâche (31).

6. Support selon l'une quelconque des revendications 1 à 5, caractérisé en ce que la sollicitation élastique (40) est assurée par un ressort qui prend appui contre l'embase (10) et contre le dispositif de commande (50).

7. Support selon l'une quelconque des revendications 1 à 6, caractérisé en ce que le dispositif de commande (50) comprend un levier (51) de manoeuvre et une liaison (52) interposée entre ce levier (51) et l'embase (10).

8. Support selon la revendication 7, caractérisé en ce que le levier (51) comprend une bielle (511) et une biellette (512) calées toutes deux en rotation sur un pivot (510) monté libre en rotation sur le dossier (D) notamment son armature (O).

9. Support selon l'une quelconque des revendications 7 et 8, caractérisé en ce que la liaison (52) comprend une came (521) qui est portée par l'embase (10) et une contre-came (522) qui coopère avec cette came (521) et qui est portée par cette biellette (512).

10. Application d'un support conforme à l'une quelconque des revendications 1 à 9 à un dossier rabattable d'un siège notamment arrière.

## Claims

1. Support for a safety belt strap winding device (E) to be mounted on a movable seat back (D) which is normally erect and may be folded down to face the seating surface of a seat intended for positioning in the passenger module (H) of a land motor vehicle, characterised in that said support is articulated and comprises a base section (10), which is capable of receiving this winding device (E) and is mounted to move relative to the seat back (D) between an active normal position and an inactive tilted position, an articulation (20) connecting this seat back (D) and this base section (10) to allow the latter (10) to tilt, a bolt (30) supported partially by this base section (10) and partially by said passenger module (H), and which is movable between a locked position, in which the seat back (D) is held in a normally erect position and at the same time the winding device (E) is capable of functioning normally, and another position, a flexible stressing means (40) for endeavouring to normally place the bolt (30) in its locked position, and an operating device (50) for placing the bolt (30) in its other position and the base section (10) in its tilted position against the action of this flexible stressing means (40) to enable the normally erect seat back (D) to be folded down to face the seating surface.

2. Support according to Claim 1, characterised in that the base section (10) comprises a base (11) which is able to receive a winding device (E) and at least one wing (12) which is coupled to the articulation (20) which supports part of the bolt (30) and is connected to the operating means (50).

3. Support according to Claim 1 or 2 for a seat, the back (D) of which has a reinforcement (O), characterised in that the articulation (20) comprises an axis (21) fixed to the reinforcement (O) of the seat back (D) and at least one bearing (22) supported by a wing (12) of the base section (10).

4. Support according to any one of Claims 1 to 3, characterised in that the bolt (30) comprises a fixed latch (31) attached to the passenger module (H) and a locking bar (32) supported by the base section (10) and movable between the locked position and this other position.

5. Support according to Claim 4, characterised in that the locking bar (32) is an integral part of the wing (12) of the base section (10) and is constructed in the form of a hook (321) with a ramp section (322) enabling them both to cooperate with the latch (31).

6. Support according to any one of Claims 1 to 5, characterised in that the flexible stressing means (40) is provided by a spring which abuts against the base section (10) and against the operating device (50).

7. Support according to any one of Claims 1 to 6, characterised in that the operating device (50) comprises an operating lever (51) and a link (52) positioned between this lever (51) and the base section (10).

8. Support according to Claim 7, characterised in that the lever (51) comprises a rod (511) and a small rod (512), both of which are fixed in rotation on a pivot (510) mounted to freely rotate on the seat back (D), in particular on its reinforcement (O).

9. Support according to either of Claims 7 and 8, characterised in that the link (52) comprises a cam (521) which is supported by the base section (10) and a cam follower (522) which cooperates with this cam (521) and is supported by this small rod (512).

10. Use of a support in accordance with any one of Claims 1 to 9 for a fold-down back of a seat, in particular a rear seat.

## Patentansprüche

1. Träger für einen Gurtroller eines Sicherheitsgurts (ε), der dazu bestimmt ist, an einer beweglichen Sitzlehne (D) angebracht zu sein, die normal aufgerichtet und auf eine Auflagefläche eines Sitzes klappbar ist, der dazu bestimmt ist, in einer Fahrgastzelle (H) eines erdgebundenen Kraftfahrzeugs angeordnet zu sein,
dadurch gekennzeichnet, daß der Träger ausschwenkbar ist und ein Basisteil (10) aufweist, das geeignet ist, den Roller (ε) aufzunehmen und das zur Sitzlehne (D) zwischen einer aktiven, normalen und einer inaktiven, gekippten Position beweglich angebracht ist, ein Gelenk (20), das die Sitzlehne (D) und das Basisteil (10) verbindet, um dem letztgenannten (10) zu gestatten, zu kippen, ein Bolzen (30), der teilweise durch das Basisteil (10) und teilweise durch die Fahrgastzelle (H) getragen ist und der zwischen einer gesperrten Position, in der die Sitzlehne (D) gleichzeitig normal aufgerichtet festgesetzt ist und der Roller (ε) normal funktionieren kann, und einer weiteren Position beweglich ist, ein elastisches Beanspruchungsteil (40), das dazu dient, den Bolzen (30) normal in seine gesperrte Position zu bringen, und eine Steuervorrichtung (50), um den Bolzen (30) in die andere Position und das Basisteil (10) in seine gekippte Position gegen das elastische Beanspruchungsteil (40) derart zu bringen, daß die normal gegenüber der Auflagefläche aufgerichtete Sitzlehne (D) geklappt werden kann.

2. Träger nach Anspruch 1,
dadurch gekennzeichnet, daß das Basisteil (10) einen Sockel (11) umfaßt, der geeignet ist, einen Roller (ε) und mindestens einen Flügel (12) aufzunehmen, der mit dem Gelenk (20) verbunden ist, der einen Teil des Bolzens (30) trägt und der mit der Steuerung (50) verbunden ist.

3. Träger nach Anspruch 1 oder 2 für einen Sitz, dessen Sitzlehne (D) eine Bewehrung (O) aufweist,
dadurch gekennzeichnet, daß das Gelenk (20) eine Achse (21), die an der Bewehrung (O) der Sitzlehne (D) befestigt ist, und mindestens ein Lager (22) umfaßt, das durch einen Flügel (12) des Basisteils (10) getragen ist.

4. Träger nach einem der Ansprüche 1 bis 3,
dadurch gekennzeichnet, daß der Bolzen (30) einen festen Schließhaken (31), der an der Fahrgastzelle (H) befestigt ist, und einen Riegel (32) umfaßt, der durch das Basisteil (10) getragen ist und zwischen der verriegelten Position und der weiteren Position beweglich ist.

5. Träger nach Anspruch 4,
dadurch gekennzeichnet, daß der Riegel (32) mit einem Flügel (12) des Basisteils (10) fest verbunden ist und sich in der Form eines Hakens (321) mit einer Rampe (322) zeigt, die geeignet sind, beide mit dem Schließhaken (31) zusammenzuwirken.

6. Träger nach einem der Ansprüche 1 bis 5,
dadurch gekennzeichnet, daß das elastische Beanspruchungsteil (40) durch eine Feder gesichert ist, die gegen das Basisteil (10) und gegen die Steuervorrichtung (50) in Anlage kommt.

7. Träger nach einem der Ansprüche 1 bis 6,
dadurch gekennzeichnet, daß die Steuervorrichtung (50) einen Betätigungshebel (51) und eine Verbindung (52) aufweist, die zwischen diesem Hebel (51) und dem Basisteil (10) eingefügt ist.

8. Träger nach Anspruch 7,
dadurch gekennzeichnet, daß der Hebel (51) ein Glied (511) und einen Schwingarm (512) aufweist, die beide drehbar auf einem Drehzapfen (510) verkeilt sind, der drehbeweglich auf der Sitzlehne (D), insbesondere ihrer Bewehrung (O), angebracht ist.

9. Träger nach Anspruch 7 oder 8,
dadurch gekennzeichnet, daß die Verbindung (52) eine Nocke (521), die durch das Basisteil (10) getragen ist, und eine Führungsnocke (522) aufweist, die mit der Nocke (521) zusammenwirkt und die durch den Schwingarm (512) getragen ist.

10. Verwendung eines Trägers nach einem der Ansprüche 1 bis 9 für eine klappbare Sitzlehne vor allem eines Rücksitzes.
